# EUROPÄISCHE PATENTSCHRIFT

(11) **EP 1 981 724 B1**
(45) Veröffentlichungstag und Bekanntmachung des Hinweises auf die Patenterteilung: **27.05.2009**
(21) Anmeldenummer: 07702360.4
(22) Anmeldetag: 18.01.2007
(51) Int. Cl.: B60C 23/00, F16C 33/76, F16C 33/58

(54) **DICHTUNGSANORDNUNG FÜR EINE REIFENDRUCK-REGULIEREINRICHTUNG**
SEAL ARRANGEMENT FOR A TYRE PRESSURE-REGULATING DEVICE
SYSTEME D'ETANCHEITE POUR INSTALLATION DE REGULATION DE LA PRESSION DES PNEUS

(30) Priorität: 10.02.2006 DE 102006006143
(43) Veröffentlichungstag der Anmeldung: 22.10.2008
(73) Patentinhaber: Schaeffler KG, 91074 Herzogenaurach (DE)
(72) Erfinder: WALTER, Wilhelm, 97490 Poppenhausen (DE); HEUBERGER, Robert, 97422 Schweinfurt (DE); SCHÄFER, Marc-André, 97421 Schweinfurt (DE)
(86) Internationale Anmeldenummer: PCT/DE2007/000079
(87) Internationale Veröffentlichungsnummer: WO 2007/090361

(56) Entgegenhaltungen:
- EP-A- 0 713 021
- EP-A1- 0 656 267
- EP-A2- 0 362 921
- DE-A1- 3 738 529
- FR-A1- 2 862 908

## Beschreibung

### Gebiet der-Erfindung

Die Erfindung bezieht sich auf eine Dichtungsanordnung für eine Reifendruck-Reguliereinrichtung für ein Kraftfahrzeug, mit einer Druckluftzuführung, die aus dem Bereich einer Radachse in eie den Fahrzeugreifen tragende Radnabe führt.

### Hintergrund der Erfindung

Der richtige Reifendruck in den Rädern eines Kraftfahrzeuges ist ein wesentliches Sicherheitsmoment für deren Fahrbetrieb, wobei stets darauf zu achten ist, dass dieser immer innerhalb der Toleranzgrenzen gehalten wird. Der . Reifendruck eines Kraftfahrzeuges beeinflusst nicht nur in besonderem Maße die Sicherheit beim Bremsen und Lenken, sondern auch die Lebensdauer des Reifens sowie das Fahrverhalten des Fahrzeuges. Darüber hinaus lassen sich durch eine gezielte Veränderung des Reifendrucks die Fahreigenschaften eines Fahrzeugs für eine Fahrt auf befestigten Straßen sowie im Gelände optimal einstellen.

Bei herkömmlichen Reifendruck-Regelsystämen, beispielsweise gemäß der US 4,434,833, wird komprimierte Luft von einer Luftzuführungsqueiie über ein Luftrohr zu einem Luftdurchgang in einem Achsengehäuse zugeführt, und die komprimierte Luft anschließend über einen weiteren Luftdurchgang und ein Luftrohr in der Achse in den Reifen eingespeist.

Die DE 28 54 772 A1 zeigt eine Einrichtung zur Überwachung des Reifendruckes an einem Kraftfahrzeug, bei dem für jeden Reifen eine Druckprüfanläge stationär eingebaut ist, die jeweils aus einem an einem Ventil- des Reifens über eine Luftleitung angeschlossenen Druckprüfer besteht. Dieser Druckprüfer ist über eine elektrische Leitung mit einem auf Druck ansprechenden elektronischen Überwachungsgerät verbünden, dem ein Signalgeber zugeordnet ist.

Da die Zuführung der Luft für einen Fahrzeugreifen bei Reifendruck-Regelsystemen üblicherweise durch das als Wälzlager ausgeführte Radlagers erfolgt, ist ein wesentlicher Aspekt die Gasdichtigkeit der Gaszuführung insbesondere im Wälzlager bzw. seiner näheren Umgebung. Dabei soll eine Druckluftleckage infolge des Eindringens von Leckageluft aus dem Dichtsystem der Druckluftdurchführung in das Wälzlager vermieden werden.

Bekannte Dichtungen an Druckluftdurchführungen durch ein Radlager weisen dennoch eine mehr oder minder starke Leckage auf. Dadurch gelangt verunreinigte Luft ungewollt in den Innenraum des Wälzlagers, welches zur Verunreinigung des Schmierstoffe, z.B. des Lagerfettes, führen kann. Darüber hinaus kann Wasser in das Wälzlager eindringen und eine Mangelschmierung hervorrufen. In das Radlager eindringende Festpartikel werden dort durch die Wälzkörper überrollt, so dass es zu Materialeindrücken in den Laufflächen kommt. Steigt der Innendruck im Wälzlager an, führt dies zu einem höheren Dichtungsverschleiß und zum Ausfall der Dichtung. Des Weiteren wird der Schmierstoff aus dem Wälzlager gedrückt, welches ebenfalls eine Mangelschmierung verursacht, Im Wälzlager vorhandene Dichtlippen werden zudem häufig umgestülpt bzw. Dichtungen aus dem Wälzlager gepresst. All diese Probleme führen zu einem frühzeitigen Lagerausfall und somit zu erhöhten Kosten. Eine hohe und über die gewünschte Lebensdauer zuverlässige Dichtigkeit des Wälzlagers gegenüber den Einrichtungen des Reifendruck-Regelsystems ist daher von besonderem Interesse.

Aus der DE 199 16 106 C2 ist ein Maschinenelement als Durchführungselement zur Durchführung von Medien während der Rotation zweier gegeneinander auf Wälzlagern geführter Maschineteile, durch die ein Medium strömt, bekannt, zwischen denen eine Dichtung angeordnet ist. Die Dichtung besitzt zwei Dichtlippehpaare, von denen sich ein Dichtlippenpaar in dem einen Maschinenteil befindet und gegen dieses dynamisch abdichtet. Das weite Dichtlippenpaar sitzt fest im zweiten Maschinenteil und ist gegen dieses statisch abdichtet. Zwischen den Dichtlippenpaaren befinden sich Bohrungen, die- zum Durchfluss von Medien, wie z.B. Gas, Druckluft, Öl, Wasser usw. dienen. Weiterhin sind zwischen den Dichtlippenpaaren Federelemente angebracht, die für einen festen Andruck der Dichtlippenpaare an die Maschinenteile sorgen. Nachteilig hierbei ist der komplizierte Aufbau der Dichtung durch das Vorsehen der Federelemente und der großen Anzahl von Dichtlippen, um eine Dichtigkeit zwischen den Maschinenelementen und dem Wälzlager zu erreichen.

Die DE 690 05 731 T2 offenbart eine Dichtvorrichtung für eine Reifendruck-Regelungsanlage, bei der zwischen einem auf einer Achse geführten Achsengehäuse und einer eine Radscheibe mit Reifen tragenden Nabe ein Wälzlager angeordnet ist. Dieses Wälzlager befindet sich in einer aus Luftrohren bestehenden Luftführung und weist mittig eine ringförmige Dichtungseinrichtung auf, die fest an der inneren Umfangsfläche der Nabe befestigt ist. Die Dichtungseinrichtung besteht aus einer Mehrzahl von Stufenteilen, Winkelteilen, Halteringen, Abstandsringen und Endplatten mit Haupt- und Hilfsdichtungen aus Fluorgummi mit einer Mehrzahl von Dichtlippen, die am Achsengehäuse anliegen. Die Häuptdichtung weist eine selbst schmierede dünne Platte auf, die an der Lippengleitfläche befestigt ist und sich in Gleitkontakt mit dem Achsengehäuse befindet. Die Dichtungseinrichtung ist sehr komplex und kompliziert aufgebaut und benötigt einen erheblich großen Bauraum Darüber hinaus sind die Lebensdauer und damit die Dichtigkeit, der Dichtungseinrichtung insbesondere wegen der dünnen Platte an der Lippengleitfläche begrenzt.

Eine Reifendruck-Regulierungseinrichtung gemäß der EP 0 224-674 B1 besitzt eine axiale Druckluftzuführung durch die Radnabe in einen Ringraum zwischen der Radnabe und dem Radnabengehäuse, der mittels Dichtungen gegenüber den Schmierstoff führenden Räumen abgedichtet ist. Die Dichtungseinrichtung besteht aus mehrgängigen Labyrinthdichtungen; die in einer radnabenseitigen Hülse und in- einer radnabengehäuseseitigen Hülse gefasst sind. Die Dichtungslamellen bestehen aus mit Kunststoffflocken beschichtetem Stahl, wobei in die Lamellenzwischenräume zum Zwecke der Abdichtung ein Fett eingebracht ist. Dadurch sind die Labyrinthdichtungen aufwendig herzustellen und zu montieren.

Eine Dichtungsanordnung in einem Wälzlager für eine Reifendruck-Reguliereinrichtung gemäß dem Oberbegriff des Anspruchs 1 ist aus der EP-A 0 656 267 bekannt."

### Aufgabe der Erfindung

Der Erfindung liegt die Aufgabe zugrunde, eine Dichtungsanordnung für eine Reifendruck-Reguliereinrichtung der eingangs genannten Art zu schaffen, die das Eindringen von Leckageluft in wälzkörperführende Bereiche des Wälzlagers eines Radlagers und damit das Eintreten von Verunreinigungen verhindert, sowie dazu noch kostengünstig herzustellen und zu montieren ist.

### Zusammenfassung der Erfindung

Der Erfindung liegt die Erkenntnis zugrunde, dass Verunreinigungen und Fremdstoffe, die durch Luftdruckleckagen in das Wälzlager eines Radlagers gelangen, zu Lagerausfällen führen können. Dies kann durch die Integration eines Dichtsystems in das Radlager bzw. Wälzläger verhindert werden welches Leckageluft gezielt aus dessen Bereich abführt:

Die gestellte Aufgabe wird gelöst durch eine Dichtungsanordnung für eine Reifendruck-Reguliereinrichtung für ein Kraftfahrzeug, mit einer Druckluftzuführung zu dem Fahrzeugreifen durch eine Bohrung im innenring eines Wälzlagers des Radlagers, ein mit der Radnabe drehfest verbundenes Dichtungsgehäuse und die Radnabe selbst, wobei auf dem Innenring des Wälzlagers eine flache Dichtung befestigt ist, deren radial äußeres Ende einezum Dichtungsgehäuse gerichtete und daran anliegende Dichtlippe aufweist.

Diese Dichtungsanordnung sorgt aufgrund ihres Aufbaus dafür, dass die bei einem Befüllvorgang unvermeidbar entstehende Leckageluft nicht in den Bereich der Wälzkörper gelangt, so dass ein Wasser- und/oder Schmutzeintritt vorteilhaft vermieden wird, welches eine erhöhte Lebensdauer des Wälzlagers zur Folge hat. Die-Leckageluft ist vielmehr gezielt nach außen in die Atmosphäre ableitbar.

Es wird daraufhin gewiesen, dass die Dichtungsanordnung gemäß der Erfindung nicht nur in einer Reifendruck-Reguliereinrichtung für ein Kraftfahrzeug, sondern auch in anderen druckluftführenden Einrichtungen verwendet werden kann, bei denen sich ein Wälzlager in unmittelbarer Nähe befindet oder bei denen eine Druckluftdrehdurchführung direkt in einem Wälzlager ausgebildet ist. Im Folgenden wird aber Bezug auf eine Reifendruck-Reguliereinrichtung genommen. Ebenso ist die Erfindung geeignet für Einrichtungen, in denen andere Gase als Luft oder andere Medien zum Einsatz kommen.

Von besonderen Vorteil bei der Dichtungsanordnung gemäß der Erfindung ist, dass bei steigendem Druck auf die flache Dichtung die Auflagefläche der Dichtlippe am Dichtungsgehäuse zunimmt, weiches zu einer günstigeren Druckverteilung und somit zu einem geringeren Reibmoment, niedrigerer Temperatur und/oder zu weniger Verschleiß zwichen den drehenden und stehenden-Teilen der Dichtung führt.

Im Normalzustand der flachen Dichtung gewährleistet eine geringe Dichtlippenüberdeckung einen geringen Verschleiß.

Die Druckluftleckage steigt während des Betriebes der Reifendruck-Reguliereinrichtung an und wird durch die flache Dichtung mit der an deren äußeren Ende zum Dichtungsgehäuse gerichteten und daran anliegenden Dichtlippe gehindert, in denjenigen Bereich des Wälzlagers zu gelangen, in dem die Wälzkörper angeordnet sind. Daher ergibt sich eine sehr gute Abdichtung im Leckagefall.

Gemäß einer weiteren Ausgestaltung der erfindungsgemäßen Dichtungsanordnung besteht die flache Dichtung - was hinsichtlich des Verschleißes von Vorteil ist - vorzugsweise aus einem elastischen Elastomer- oder Kunststoffmaterial.

Außerdem kann vorgesehen sein, dass die flache Dichtung mit einem fest auf de Innenring des Wälzlagers angeordneten. Trägerteil verbunden ist. Dabei besteht das Trägerteil vorzugsweise aus Stahlblech. Dadurch werden eine stabile Lage und eine gewisse Festigkeit der Dichtung erreicht. Darüber hinaus ist die Dichtung mit dem Trägerteil einfach herzustellen und zu montieren.

Gemäß einer bevorzugten Ausführungsform der Erfindung ist vorgesehen, dass innerhalb des Diähtungsgehäuses zumindest ein, bevorzugt zwei Gleitringe befestigt sind, dessen bzw. deren vom Dichtungsgehäuse wegweisender innenfläche mit der zum Dichtungsgehäuse weisenden Außenfläche eines Blechrings, insbesondere eines L-förmigen und/oder geteilten Blechrings, in Dichtungskontakt ist.

Bevorzugt kann der Blechring im Querschnitt trogförmig ausgebildet sein, wobei zwei L-förmige Teile miteinander verzahnt sind und die Tropfenform ausbilden. An seinem zum Lagerinnenring weisenden Boden kann dieser eine Bohrung aufweisen. Weiterhin kann bevorzugt vorgesehen sein, dass die dem Lagerinnenring zugewandet Bodenseite des Blechrings auf der flache Dichtung im Bereich deren Luftzuführ-Bohrung, insbesondere formschlüssig, aufliegt.

Zudem ist Bestandteil der Erfindung, dass im Wesentlichen zwischen der flachen- Dichtung und dem innenringseitigen Enden des Dichtungsgehäuses bzw. des Gleitrings Leckageaufnahmeräume zur Aufnahme bzw. Weiterleitung von Leckageluft ausgebildet sind. Die Leckageaufnahmeräume sind dabei rechts- und linksseitig zur Luftzuführbohrung im Innenring angeordnet und derart ausgebildet, dass diese in Strömungsverbindung mit Bohrungen zur Abführung von Leckageluft und dem Dichtspalt zwischen dem Gleitring und dem Blechring sind.

Um die Leckageluft aus dem Wälzlager abzuführen, stehen mehrere Möglichkeiten zur Verfügung. Gemäß einer ersten Variante sind in der flachen Dichtung und im Innenring des Wälzlagers achsparallel zur Druckluftzuführing ausgerichtete Bohrungen zur Abführung der bei der Druckluftbefüllung des Reifens auftretenden Leckageluft ausgebildet. Bei einem Luftüberdruck, der beim Befüllen des Reifens mit Druckluft entsteht, wird die Leckageluft über die Bohrungen, die gegebenenfalls mit einem Entlüftungsventil verbunden sind, in die umgebende Atmosphäre abgegeben.

Bei einer zweiten Variante sind im Dichfüngsgehäüse achsparallel zur Druckluftzuführung ausgerichtete Bohrungen zur Abführung der bei der Druckluftzuführung auftretenden Leckageluft ausgebildet. Hierbei erfolgt die Ableilung der Leckageluft über die Radnabe in die Umgebung.

Gemäß einer weiteren Variante der erfindungsgemäßen Dichtungsanordnung sind im Dichtungsblechring des Dichtungsgehäuses seitlich nach radial außen weisende Bohrungen zur Abführung der bei der Druckluftzuführung auftretenden Leckageluft ausgebildet.

Die abgeführte Leckageluft kann auch über einen Zapfen oder eine Achse des Radlagers in ein anderes belüftetes System des Fahrzeuges, z.B. in den Achsantrieb, abgegeben werden.

Bei allen diesen vorgenannten Varianten können die zur Ableitung von Leckageluft vorgesehenen Öffnungen mit einem Entlüftungsventil verbunden sein.

### Kurze Beschreibung der Zeichnungen

Die Erfindung wird im Folgenden anhand der beiliegenden Zeichnung an einigen Ausführungsformen näher erläutert. Darin zeigt
- Fig. 1: eine schematische Längsschnittdarstellung eines Radlagers mit einer Reifendruck-Reguliereinrichtung und einem zweireihigen Wälzlager,
- Fig. 2: eine Schnittdarstellung eines Wälzlagers gemäß Fig. 1 mit einer erfindungsgemäßen Dichtungsanordnung für die Reifendruck-Reguliereinrichtung,
- Fig. 3: eine Schnittdarstellung des Wälzlager gemäß Fig. 2, die den Verlauf der Luftführungen im Wälzlager zeigt,
- Fig. 4: eine Schnittdarstellung des Wälzlagers mit einer zweiten Möglichkeit der Abführung von Leckageluft,
- Fig. 5: eine Schnittdarstellung des Wälzlagers mit einer dritten Möglichkeit der Abführung von Leckageluft,
- Fig. 6a: eine Schnittdarstellung des Wälzlagers mit einer Speicherung von Leckageluft innerhalb der Dichtungsanordnung bei anliegender Druckluft, und
- Fig. 6b: eine Schnittdarstellung des Wälzlagers mit einer Rückführung von Leckageluft aus der Dichtungsanordrtung gemäß Fig. 6a bei nicht anliegender Druckluft.

### Detaillierte Beschreibung der Zeichnungen

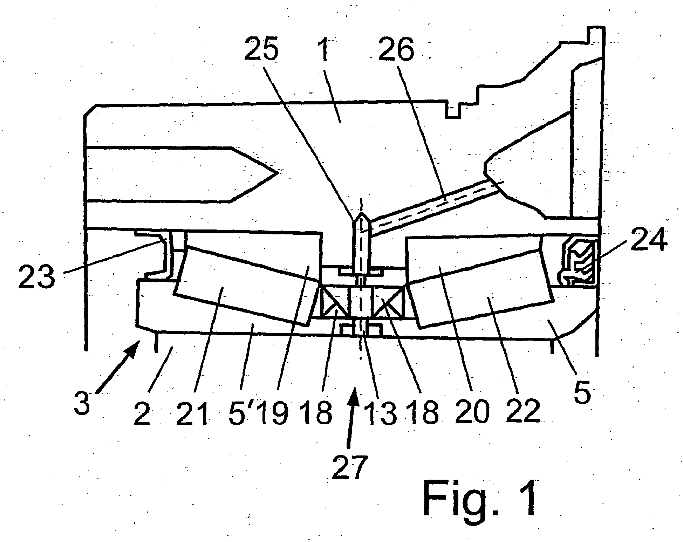

Demnach ist in Fig. 1 in einer stark vereinfachten Längsschnittdarstellung eine Radnabe1 eines Kraftfahrzeugrades mit einer Dichtungsanordnung einer Reifendruck-Reguliereinrichtung dargestellt, welche zur Befestigung eines Reifens in an sich bekannter und hier nicht weiter dargestellten Weise geeignet ist. Die Radnabe 1 ist über ein Radlager auf einem Zapfen 2 bzw. einer Radachse drehbar gelagert, der ein Wälzlager 3 mit zwei Innenringen 5, 5', zwei Außenringen 19, 20 und dazwischen angeordneten Wälzkörpern 21, 22 trägt.

Das Wälzlager 3 ist mit einem hier nicht dargestellten Schmierfett für die Wälzkörper 21, 22 gefüllt und axial außen durch Dichtmittel 23, 24 sowie axial innen gegenüber den Innenringen 5, 5' bei vorhandener radial durchdringender Bohrung 13 oder bei vorhandenen mehreren radial durchdringenden Bohrungen 13 über eine Dichtung 18 abgedichtet. Diese Dichtung 18 sorgt dafür, dass bei einem Druckluft-Befüll-vorgang am Reifen mittels den Bohrungen 13 und Lift-Zuführbohrungen 25, 26 in der Radnabe 1 keine Leckagetuft in den fettgpfüllten und die Wälzkörper 21, 22 aufnehmenden Raum des Wälzlagers 3 gelangt.

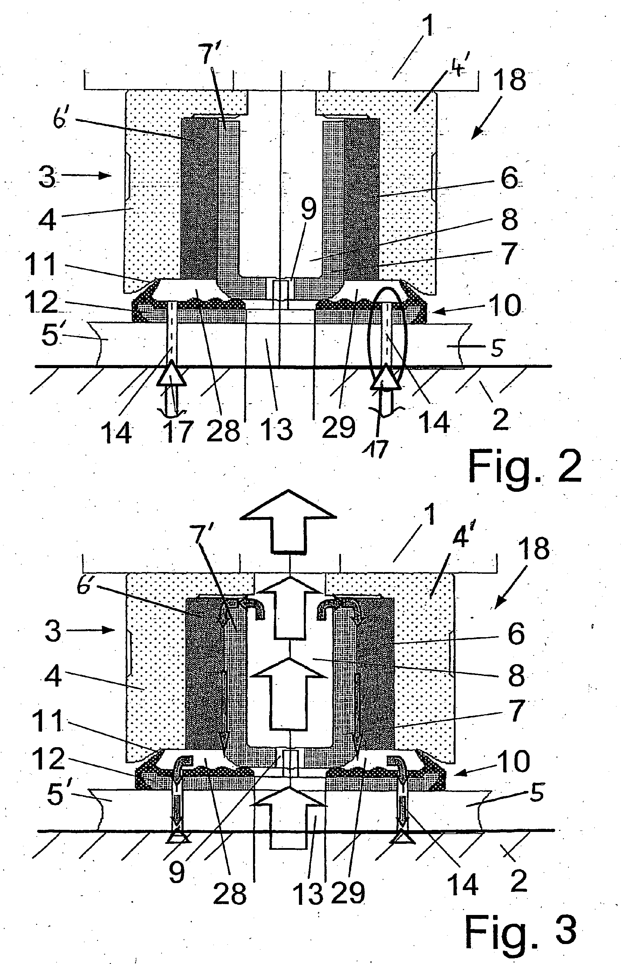

In den Figuren 2 bis 6 sind unterschiedliche, jedoch jeweils erfindungsgemäß ausgebildete Dichtungsanordnungen 18 der in Fig. 1 gezeigten Art im Detail dargestellt. Deren Aufbau wird nachfolgend unter Bezugnahme auf Fig. 2 beschrieben, wobei die beschriebenen Details weitgehend auch-den Figuren-3 bis 6 entnehmbar sind. Unterschiede in den Zeichnungsfiguren werden jeweils gesondert erläutert.

Zwischen der Radnabe 1 und dem Zapfen 2 bzw. der Achse des Fahrzeugs sind demnach Dichtungsgehäuse 4 und 4' zur Bildung einer Drehdurchführung für die in den Fahrzeugreifen zu leitende Luft und einer diesbezüglichen Dichtung dargestellt. Die Dichtungsgehäuse 4 und 4' sind drehfest mit der Radnabe 1 verbunden, so dass es mit diesem gegenüber dem Zapfen 2 drehbar angeordnet ist. Der Zapfen 2 trägt, wie schon im Zusammenhang mit Fig. 1 erläutert, drehfest die Innenringe 5, 5' des Wälzlagers 3, von denen hier jeweils nur dessen mittlerer Abschnitt erkennbar ist.

Die Dichtungsgehäuse 4, 4' umfassen beispielhaft einen drehfest mit diesem verbundenen Gleitring 6, 6' sowie einen koaxial darin angeordneten und im Querschnitt L-förmigen, geteilten Blechring 7, 7', in dessen Innern ein trogförmiger Raum 8 gebildet ist. Der Blechring 7 weist an seinem Bodenabschnitt eine Verzahnung mit Durchgangsöffnung 9 auf und liegt auf einer flachen Dichtung 10 auf, welche auf den Innenringen 5, 5' befestigt ist. Das äußere Ende dieser Dichtung 10 weist eine zum Dichtungsgehäuse 4 gerichtete und an dessen Unterseite anliegende Dichtlippe 11 auf.

Die flache Dichtung 10 und die Unterseite des Blechrings bzw. des Dichtungsgehäuses 3 sind nun so ausgebildet, dass im Wesentlichen zwischen dem innenringseitigen Ende des Dichtungsgehäuses 3 und der Dichtung 10 Leckageaufnahmeräume 28 und 29 zur Aufnahme bzw. Weiterleitung von Leckageluft ausgebildet sind. Die Leckageaufnahmeräume 28 und 29 sind derart ausgebildet, dass diese in Strömungsverbindung mit den die Leckageluft abführenden Bohrungen 14, 15 sowie mit einem Dichtspalt zwischen dem Gleitring 6, 6' und dem Blechring 7, 7' sind.

Die flache Dichtung 10 besteht vorzugsweise aus einem Elastomer- oder elastischem Kunststoffmaterial, und ist hier mit einem fest auf den Innenringen 5, 5' des Wälzlagers 3 angeordneten Trägerteil 12 aus Stahlblech verbunden sowie gemeinsam mit diesem auf den Innenringen 5, 5' aufgeschoben. Die Dichtlippe 11 ist, zu ihrem äußeren freien Ende hin zugespitzt und schräg nach innen geneigt ausgebildet.

Die Dichtung 10, das Trägerteil 12 und die Innenringe 5, 5' des Wälzlagers 3 besitzen eine gemeinsame Luftdurchgangsöffnung 13, ähnlich einer Bohrung, größeren Durchmessers, so dass sich ein Durchgang für Druckluft von einer nicht näher dargestellten Druckluftzuführungsquelle der Reifendruck-Reguliereinrichtung über den Zapfen 2, die Innenringe 5, 5', die Dichtung 10, die Verzahnung mit Öffnung der Blechrings 7, 7', den Ringraum 8 des Dichtungsgehäuses 3 und die Radnabe 1 zu einem nicht gezeigten Reifen eines Kraftfahrzeugrades ergibt. Dieser Druckluftdurchgang wird durch die großen Pfeile in Fig. 3 symbolisiert.

Bei der Ausführungsform gemäß Fig. 2 sind die Dichtung 10, das Trägerteil 12 und die Innenringe 5, 5' des Wälzlagers 3 mit zumindest zwei in Längswichtung zueinander beabstandeten gemeinsamen Bohrungen 14 kleineren Durchmessers versehen, die achsparallel zum Druckluftdurchgang (Bohrung 13) ausgerichtete sind. Sie dienen zur Abführung der bei der Druckluftbefüllung auftretenden Leckageluft. Diese Leckageluftabführung ist durch die kleineren Pfeile in Fig. 3 symbolisiert dargestellt und verläuft im Wesentlichen in einer Richtung, die der Druckluftzuführrichtung entgegengerichtet ist.

Dabei gelangt bei einem Befüllvorgang zurächst Leckägeluft zwischen die Gleitringe 6, 6' und die Blechringe 7, 7', und von dort in die bereits genannten Leckageaufnahmeräume 28 und 29, von dem die Leckageluft über die Bohrungen 14, den Innenring 5 und die Nabe 2 in die Atmosphäre entweicht.

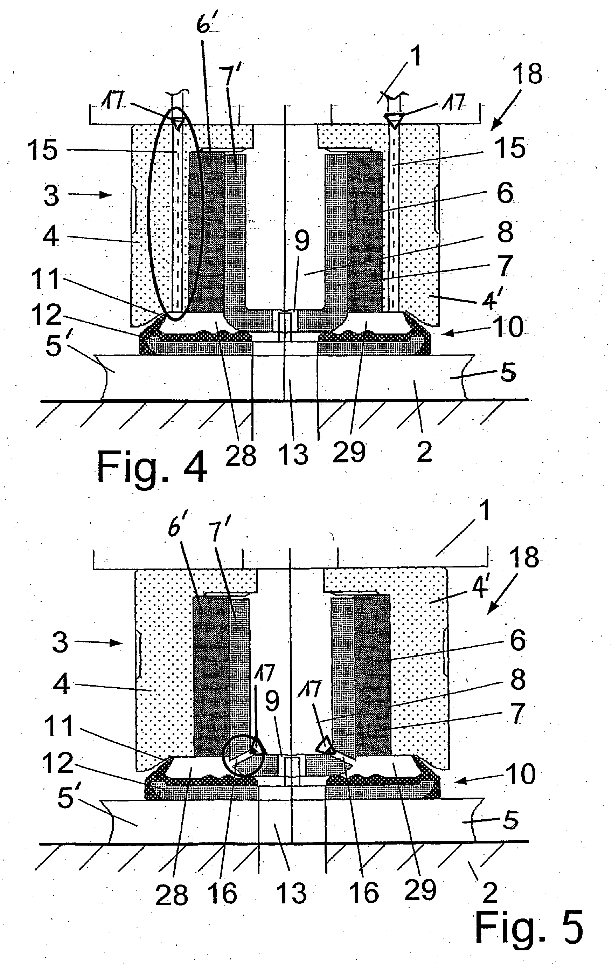

Eine weitere Variante zur Abführung der bei der Druckluftbefüllung auftretenden Leckageluft ist in Fig. 4 dargestellt. Hierfür sind im Dichtungsgehäuse 4 bzw. 4' zwei achsparallel zur Druckluftzuführung (Bohrung 13) ausgerichtete Bohrungen 15 ausgebildet, durch die Leckageluft von den genannten Leckageaufnahmeräümen 28, 29 über die Radnabe 1 in die Umgebung gelangen kann.

Es kann aber auch vorgesehen sein, dass die Leckageluft über hier nicht weiter dargestellte axiale Bohrungen in der Radnabe axial nach außen in die Atmosphäre geleitet wird.

Gemäß einer anderen Variante der Abführung der bei der Druckluftbefüllung auftretenden Leckageluft zeigt Fig. 5. Im Blechring 7 des Dichtungsgehäuses 4 sind mindestens zwei Bohrungen 16 zur Abführung der Leckageluft ausgebildet. Diese befinden sich im Eckbereich des Bodens und den Seitenwänden des Blechringes 7. Die Bohrungen 16 sind bei einem Befüllvorgang, beispielsweise durch im Ringraum 8 angeordnete und in Fig. 5 angedeutete flexible, ventilartige Dichtmittel verschlossen. Leckageluft wird durch diese Bohrungen 16 später, bei nicht anliegendem Befüllluftdruck in Richtung zur Radnabe 1 in die umgebende Atmosphäre abgeführt.

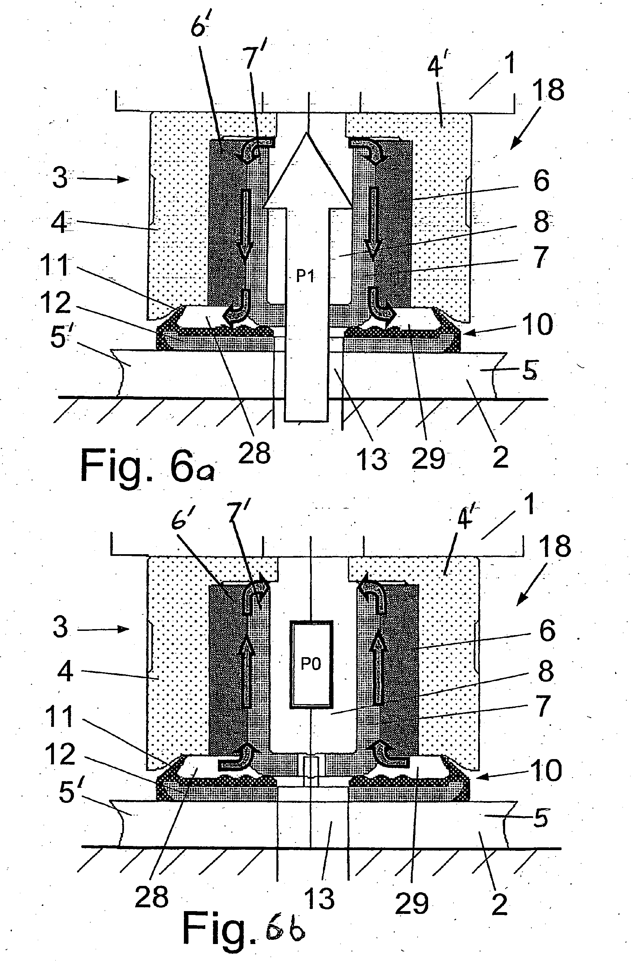

Die Figuren 6a und b zeigen eine Ausführungsvariante, bei der keine zusätzeliche Öffnung bzw. Bohrung zur Abführung der bei der Druckluftbefüllung auftretenden Leckageluft vorhanden ist. Die Leckageluft wird hierbei über die mechanische Dichtung der Gleitringe 6, 6' gemäß Fig. 6a bei anliegendem Luftdruck P1 der Reifendruck-Reguliereinrichtung in den Leckageaufnahmeräumen 28, 29 geführt und dort zwischengespeichert. Die Abführung dieser Leckageluft erfolgt gemäß Fig. 6b bei nicht anliegendem- Luftdruck P0 in Richtung zur Radnabe 1 in das druckentlastete System.

Gegebenenfalls können die zur Ableitung von Leckageluft vorgesehenen Bohrungen bzw. Öffnungen 14, 15 und 16 mit einem Entlüftungsventil 17 verbunden sein, wie dies beispielhaft in Fig. 2 gezeigt ist.

Alle hier vorgestellten Varianten der Dichtungsanordnungen 18 stellen sicher, dass aufgabengemäß keine Leckageluft und mit dieser Wasser, Schutz o. ä. in die axial benachbarten Aufnahmeräume für die Wälzkörper des Wälzlagers des Radlagers gelangt.

### Bezugszeichen

- 1: Radnabe
- 2: Zapfen
- 3: Wälzlager
- 4: (auch 4') Dichtungsgehäuse
- 5: (auch 5') Innenring
- 6: (auch 6') Gleitring
- 7: (auch 7') Blechring
- 8: Ringraum
- 9: Durchgangsöffnung
- 10: Dichtung
- 11: Dichtlippe
- 12: Trägerteil
- 13: Bohrung
- 14: Bohrung
- 15: Bohrung
- 16: Bohrung
- 17: Entlüftungsventil
- 18: Dichtungsanordnung
- 19: Außenring
- 20: Außenring
- 21: Wälzkörper
- 22: Wälzkörper
- 23: Dichtung
- 24: Dichtung
- 25: Zuführbohrung in Radnabe
- 26: Zuführbohrung in Radnabe
- 27: Reifendruck-Reguliereinrichtung
- 28: Leckageaufnahmeraum
- 29: Leckageaufnahmeraum

## Patentansprüche

1. Dichtungsanordnung (18) für eine Reifendruck-Reguliereinrichtung für ein Kraftfahrzeug, mit einer Druckluftzuführung zu einem Fährzeugreifen durch eine Bohrung (13) im Innenring (5) eines Wälzlagers (3) eines Radlagers, durch ein mit einer Radnabe (1) drehfest verbundenes Dichtungsgehäuse (4) und durch die Radnabe (1) selbst, **dadurch gekennzeichnet, daß** auf dem Innenring (5) des Wälzlagers (3) eine flache Dichtung (10) befestigt ist, deren radial äußeres Ende eine zum Dichtungsgehäuse (4) gerichtete und daran anliegende Dichtlippe (11) aufweist.

2. Dichtungsanordnung nach Anspruch 1, **dadurch gekennzeichnet, dass** die flache Dichtung (10) aus einem Elastomer- oder elastischem Kunststoffmaterial besteht.

3. Dichtungsanordnung nach Anspruch 1 oder 2, **dadurch gekennzeichnet, dass** die flache Dichtung (10) mit einem fest auf dem Innenring (5) des Wälzlagers (3) angeordneten Trägerteil (12) verbunden ist.

4. Dichtungsanordnung nach zumindest einem der Ansprüche 1 bis 3, **dadurch gekennzeichnet, dass** innerhalb des Dichtungsgehäuses (4) ein Gleitring (6) befestigt ist, dessen vom Dichtungsgehäuse wegweisende Innenfläche mit der zum Dichtungsgehäuse weisenden Außenfläche eines Blechrings (7) in Dichtungskontakt ist, dass der Blechring (7) im Querschnitt trog- oder topfförmig ausgebildet ist und an seinem zum Lagerinnenring (5) weisenden Boden eine Bohrung (9) aufweist, und dass die dem Lagerinnenring (5) zugewandet Bodenseite des Blechrings (7) auf der flache Dichtung (10) im Bereich deren Bohrung (13) aufliegt.

5. Dichtungsanordnung nach zumindest einem der- Ansprüche 1 bis 4, **dadurch gekennzeichnet, dass** im Wesentlichen zwischen der flachen Dichtung (10) und dem innenringseitigen Ende des Dichtungsgehäuses (3) Leckageaufnahmeräume (28, 29) zur Aufnahme bzw. Weiterleitung von Leckageluft ausgebildet sind.

6. Dichtungsanordhung nach Anspruch 5, **dadurch gekennzeichnet, dass** Leckageaufnahmeräume (28, 29) derart ausgebildet sind, dass diese in Strömungsverbindung mit Bohrungen (14, 15, 16) zur Leckageabfuhr und dem Dichtspalt zwischen dem Gleitring (6) und dem Blechring (7) sind.

7. Dichtungsanordnung nach zumindest einem der Ansprüche 1 bis 6, **dadurch gekennzeichnet, dass** im Dichtungsgehäuse (4) achsparallel zur Druckluftzuführung (Bohrung 13) ausgerichtete Bohrungen (15) zur Abführung der bei der Druckluftbefüllung auftretenden Leckageluft ausgebildet sind.

8. Dichtungsanordnung nach zumindest einem der Ansprüche 1 bis 7, **dadurch gekennzeichnet, dass** in der flachen Dichtung (10) und im Innenring (5) des Wälzlagers (3) achsparallel zur Druckluftzuführung (Bohrung 13) ausgerichtete Bohrungen (14) zur Abführung der bei der Druckluftbefüllung auftretenden Leckageluft ausgebildet sind.

9. Dichtungsanordnung nach zumindest- einem der Ansprüche 1 bis 8, **dadurch gekennzeichnet, dass** in dem Blechring (7) bodennah seitlich nach radial außen weisende Bohrungen (16) zur Abführung der bei der Druckluftbefüllung auftretenden Leckageluft ausgebildet sind.

10. Dichtungsanordnung nach zumindest einem der Ansprüche 1 bis 9, **dadurch gekennzeichnet, dass** die zur Ableitung von Leckageluftvorgesehenen Bohrungen (14, 15, 16) mit einem Entlüftungsventil (17) verbunden sind.

## Claims

1. Seal arrangement (18) for a tire pressure regulating device for a motor vehicle, with a compressed air supply to a vehicle tire through a bore (13) in the inner ring (5) of a rolling bearing (3) of a wheel bearing, through a seal housing (4) connected fixedly in terms of rotation to a wheel hub (1), and through the wheel hub (1) itself, **characterized in that** there is fastened on the inner ring (5) of the rolling bearing (3) a flat seal (10), the radially outer end of which has a sealing lip (11) directed toward the seal housing (4) and bearing against the latter.

2. Seal arrangement according to Claim 1,
**characterized in that** the flat seal (10) consists of an elastomer or elastic plastic material.

3. Seal arrangement according to Claim 1 or 2,
**characterized in that** the flat seal (10) is connected to a carrier part (12) arranged firmly on the inner ring (5) of the rolling bearing (3).

4. Seal arrangement according to at least one of Claims 1 to 3, **characterized in that**, within the seal housing (4), a sliding ring (6) is fastened, of which the inner surface pointing away from the seal housing is in sealing contact with the outer surface, pointing toward the seal housing, of a sheet metal ring (7), **in that** the sheet metal ring (7) is designed with a trough-shaped or pot-shaped cross section and has a bore (9) on its bottom pointing toward the bearing inner ring (5), and **in that** the bottom side, facing the bearing inner ring (5), of the sheet metal ring (7) lies on the flat seal (10) in the region of the bore (13) of the latter.

5. Seal arrangement according to at least one of Claims 1 to 4, **characterized in that** leakage reception spaces (28, 29) for the reception or transfer of leakage air are formed essentially between the flat seal (10) and the inner ring-side end of the seal housing (3).

6. Seal arrangement according to Claim 5,
**characterized in that** leakage reception spaces (28, 29) are designed in such a way that they are flow-connected to bores (14, 15, 16) for leakage discharge and to the sealing gap between the sliding ring (6) and the sheet metal ring (7).

7. Seal arrangement according to at least one of Claims 1 to 6, **characterized in that** bores (15), oriented axially parallel to the compressed air supply (bore 13), for discharging the leakage air occurring during filling with compressed air are formed in the seal housing (4).

8. Seal arrangement according to at least one of Claims 1 to 7, **characterized in that** bores (14), oriented axially parallel to the compressed air supply (bore 13), for discharging the leakage air occurring during filling with compressed air are formed in the flat seal (10) and in the inner ring (5) of the rolling bearing (3).

9. Seal arrangement according to at least one of Claims 1 to 8, **characterized in that** bores (16), pointing radially outward, for discharging the leakage air occurring during filling with compressed air are formed laterally, near the bottom, in the sheet metal ring (7).

10. Seal arrangement according to at least one of Claims 1 to 9, **characterized in that** the bores (14, 15, 16) provided for diverting leakage air are connected to a venting valve (17).

## Revendications

1. Système d'étanchéité (18) pour une installation de régulation de la pression des pneus pour un véhicule automobile, avec une amenée d'air sous pression conduisant à un pneu de véhicule en passant par un alésage (13) situé dans la bague intérieure (5) d'un roulement à cylindres (3) d'un roulement de roue, par un boîtier d'étanchéité (4) relié fixement à un moyeu de roue (1) et par le moyeu de roue (1) lui-même, **caractérisé en ce qu'**un joint plat (10) est fixé sur la bague intérieure (5) du roulement à cylindres (3), l'extrémité extérieure dans le plan radial dudit joint comportant une lèvre d'étanchéité (11) orientée vers le boîtier d'étanchéité (4) et reposant contre lui.

2. . Système d'étanchéité selon la revendication 1, **caractérisé en ce que** le joint plat (10) est fabriqué à partir d'une matière synthétique élastomère ou élastique.

3. . Système d'étanchéité selon la revendication 1 ou 2, **caractérisé en ce que** le joint plat (10) est relié à une partie de support (12) disposée fixement sur la bague intérieure (5) du roulement à cylindres (3).

4. . Système d'étanchéité selon au moins l'une quelconque des revendications 1 à 3, **caractérisé en ce qu'**un anneau de glissement (6) est fixé à l'intérieur du boîtier d'étanchéité (4), la surface intérieure de l'anneau de glissement orienté vers l'extérieur du boîtier d'étanchéité étant en contact étanche avec la surface extérieure d'un anneau en tôle (7) orienté vers le boîtier d'étanchéité, que l'anneau en tôle (7) prend une forme de pot ou d'auge dans sa section transversale et comporte un alésage (9) au niveau de son fond orienté vers la bague intérieure de roulement (5), et que le côté de fond de l'anneau en tôle (7) orienté vers la bague intérieure de roulement (5) repose sur le joint plan (10) dans la zone de son alésage (13).

5. . Système d'étanchéité selon au moins l'une quelconque des revendications 1 à 4, **caractérisé en ce que** des espaces de réception de fuite (28, 29) sont réalisés pour l'essentiel entre le joint plat (10) et l'extrémité du boîtier d'étanchéité (3) située du côté de la bague intérieure pour recevoir et/ou acheminer l'air de fuite.

6. . Système d'étanchéité selon la revendication 5, **caractérisé en ce que** les espaces de réception de fuite (28, 29) sont réalisés de telle sorte qu'ils sont en jonction de flux avec les alésages (14, 15, 16) pour évacuer les fuites ainsi qu'avec la fente étanche, entre l'anneau de glissement (6) et l'anneau en tôle (7).

7. . Système d'étanchéité selon au moins l'une quelconque des revendications 1 à 6, **caractérisé en ce que** des alésages (15) orientés parallèlement à l'axe par rapport à l'amenée d'air sous pression (alésage 13) sont réalisés dans le boîtier d'étanchéité (4) pour évacuer l'air de fuite se formant lors du remplissage avec de l'air sous pression.

8. . Système d'étanchéité selon au moins l'une quelconque des revendications 1 à 7, **caractérisé en ce que** des alésages (14) sont orientés parallèlement à l'axe dans le joint plan (10) et dans la bague intérieure (5) du roulement à cylindres (3) pour l'amenée d'air sous pression (alésage 13) pour évacuer l'air de fuite se formant lors du remplissage avec de l'air sous pression.

9. . Système d'étanchéité selon au moins l'une quelconque des revendications 1 à 8, **caractérisé en ce que** des alésages (16) orientés radialement vers l'extérieur, en côté, à proximité du sol, sont disposés dans l'anneau en tôle (7) pour évacuer l'air de fuite se formant lors du remplissage avec de l'air sous pression.

10. . Système d'étanchéité selon au moins l'une quelconque des revendications 1 à 9, **caractérisé en ce que** les alésages (14, 15, 16) prévus pour évacuer l'air de fuite sont reliés à une soupape de ventilation (17).
